# EUROPÄISCHE PATENTSCHRIFT

(11) **EP 3 199 851 B1**
(45) Veröffentlichungstag und Bekanntmachung des Hinweises auf die Patenterteilung: **18.09.2019**
(21) Anmeldenummer: 17153437.3
(22) Anmeldetag: 27.01.2017
(51) Int. Cl.: F16K 31/50, F16K 1/08, F16K 1/38, F16K 1/42, F16K 25/00, F16K 27/02

(54) **ABSPERRARMATUR**
SHUT-OFF VALVE
ROBINET D'ARRÊT

(30) Priorität: 27.01.2016 DE 202016000514 U
(43) Veröffentlichungstag der Anmeldung: 02.08.2017
(73) Patentinhaber: Gebr. Kemper GmbH + Co. KG Metallwerke, 57462 Olpe (DE)
(72) Erfinder: Keine, Ulrich, 57439 Attendorn (DE); Tinkloh, Thomas, 57462 Olpe (DE)
(74) Vertreter: Grünecker Patent- und Rechtsanwälte PartG mbB

(56) Entgegenhaltungen:
- EP-A1- 0 473 119
- EP-A1- 2 770 235
- WO-A1-2014/170209

## Beschreibung

Die vorliegende Erfindung betrifft eine Absperrarmatur mit den oberbegrifflichen Merkmalen von Anspruch 1. Eine solche Absperrarmatur ist aus CH 201 712 A bekannt.

Der Ventilsitz der erfindungsgemäßen Absperrarmatur ist bevorzugt an einer Trennwand vorgesehen, die eine Ausnehmung ausbildet. Die Ausnehmung ist begrenzt von dem Ventilsitz, an den der Ventilkörper in einer Schließstellung dichtend anlegbar ist. Der Ventilkörper ist des Weiteren senkrecht zu der Längserstreckungsrichtung, d. h. senkrecht zu der Hauptströmungsrichtung des Gehäuses in eine Offenstellung stellbar.

Dabei wird bei der vorliegenden Erfindung davon ausgegangen, dass die Hauptströmungsrichtung insbesondere gebildet wird durch zwei Stutzen des Gehäuses, die üblicherweise dem Anschluss von Rohrleitungen dienen und die hierfür üblicherweise ein Innen- oder ein Außengewinde aufweisen können. Die Stutzen sind üblicherweise exakt fluchtend zueinander vorgesehen. Diese Ausgestaltung gilt für den Stand der Technik. Sie kann in gleicher Weise auch für die vorliegende Erfindung gelten.

Im Stand der Technik ist die Trennwand üblicherweise so ausgebildet, dass der Ventilsitz durch eine Ringfläche gebildet ist, die durch die Trennwand ausgeformt wird und welche sich rechtwinklig zu der Bewegungsrichtung des Ventilkörpers erstreckt. Dieser Ventilkörper hat üblicherweise eine gummielastische Ringscheibe, die gegen den Ventilsitz angelegt wird. Aufgrund dieser Ausgestaltung muss die Strömung durch das Gehäuse in Hauptströmungsrichtung umgelenkt werden, und zwar in einer Richtung rechtwinklig zu der Längserstreckung des Gehäuses, da sie die von dem Ventilsitz umgebene Öffnung üblicherweise bei einer vereinfachten Sicht in Bewegungsrichtung des Ventilkörpers durchströmt. Die Trennwand ragt dementsprechend zumindest einseitig weit in Bewegungsrichtung des Ventilkörpers in das Gehäuse hinein und verlegt denjenigen Weg, den die Strömung bei geringem Strömungsverlust nehmen würde, d. h. den geradlinigen Weg durch das Gehäuse.

Im Stand der Technik sind auch solche Armaturen zu finden, deren Ventilsitz nicht rechtwinklig zur Längserstreckungsrichtung angeordnet ist, wohl aber senkrecht zur Bewegungsrichtung des Ventilkörpers. Solche Armaturen sind aber nicht zur Montage unter Putz geeignet.

Aus der DE 39 01 695 A1 ist ein Hubventil bekannt, welches einen im Querschnitt im Grunde sichelförmigen Ventilkörper aufweist, der an nach hinten gegenüber dem Hauptströmungsdurchgang durch das Ventil vorgesehenen Dichtflächen anliegt und welcher ein gutes Verhältnis zwischen Durchströmungsquerschnitt auf Höhe des Ventils und Sitzquerschnitt bieten soll. Die spezielle Ausgestaltung des Ventilkörpers macht indes eine genaue Ausrichtung des Ventilkörpers bei der Montage erforderlich. Anderenfalls können Undichtigkeiten auftreten. Ein ähnliches Problem geht mit dem aus der EP 0 239 009 A2 und dem aus der DE 546 464 A bekannten Hubventil einher.

Entsprechendes gilt für das aus der US 2 891 763 A bekannte Ventil. Bei diesem besteht zusätzlich das Problem, dass innerhalb des Ventilgehäuses die Strömung erheblich umgelenkt wird, um eine ringförmige und zumindest schräg zu der Stellachse des Ventils gerichtete Ventilfläche auszubilden, an welche das Ventil endseitig aufgesetzt wird.

Aus der CH 201 712 A ist ein Ventil mit einem Ventilsitz bekannt, welcher sich aus einzelnen Dichtleisten zusammensetzt. Die Einmündungen eines Einlasskanals und eines Auslasskanals sind dabei durch zwei kegelringförmige Dichtleisten umschlossen, welche an zwei einander gegenüberliegenden Stellen mit als Verbindungsstege ausgebildete Dichtleisten verbunden sind. Eine der kegelringförmigen Dichtleisten kann dabei durch eine entsprechend bearbeitete Gehäusewand ersetzt werden.

Die DE 259 264 A sowie die DE 20 48 580 A offenbaren jeweils kegelstumpfförmige Ventilkörper, die an eine sich diagonal zu der Hauptströmungsrichtung innerhalb des Ventilkörpers erstreckenden Ventilsitz zur Anlage gelangen. Dieser Ventilsitz durchsetzt als schräg verlaufende Trennwand mit Bohrung den Ventilkörper. Die aus diesen beiden Druckschriften bekannten Lösungen verursachen jeweils einen nicht unerheblichen Druckverlust bei einer Strömung durch das geöffnete Ventil.

Aus der auf die vorliegende Anmelderin zurückgehenden EP 2 770 235 A1 ist eine Absperrarmatur der gattungsgemäßen Art bekannt. Diese Absperrarmatur erlaubt zwar ein relativ widerstandsarmes Durchströmen der Armatur mit Wasser. Allerdings besteht auch gegenüber diesem Stand der Technik noch Raum für Verbesserungen. So lässt sich der Strömungswiderstand beim Durchströmen der Armatur weiter verringern. Des Weiteren besteht auch die Möglichkeit, die Dichtigkeit zu erhöhen und die vorbekannte Absperrarmatur hinsichtlich der Verschleißfestigkeit zu verbessern.

Zur Lösung des obigen Problems wird mit der vorliegenden Erfindung eine Absperrarmatur mit den Merkmalen von Anspruch 1 angegeben.

Bei der erfindungsgemäßen Absperrarmatur weist der Ventilsitz einen Dichtungsabschnitt auf, der sich in Betätigungsrichtung des Ventilkörpers erstreckt. Dadurch ist die Möglichkeit gegeben, bei Betätigung des Ventilkörpers zur Stellung des Ventilkörpers von seiner Offenstellung in die Geschlossenstellung diesen an den Dichtungsabschnitt anzulegen. Der Dichtungsabschnitt erstreckt sich vorzugsweise streng in Betätigungsrichtung des Ventilkörpers, wodurch bis zum vollständigen Anliegen des Ventilkörpers an dem Dichtungsabschnitt eine relativ reibungsarme Annäherung gewährleistet wird und beim Anliegen vor allem eines rotationssymmetrischen Ventilkörpers an den sich in Betätigungsrichtung des Ventilkörpers erstreckenden Dichtungsabschnitt eine zuverlässige Abdichtung erreicht. In Verlängerung des Dichtungsabschnitts, und zwar in Betätigungsrichtung des Ventilkörpers ist erfindungsgemäß ein bodenseitiger Dichtungsabschnitt vorgesehen, der Teil des Ventilsitzes ist. Der sich in Betätigungsrichtung des Ventilkörpers erstreckenden Dichtungsabschnitt geht in Verlängerung der Betätigungsrichtung in diesen bodenseitigen Dichtungsabschnitt über. So befindet sich der bodenseitige Dichtungsabschnitt in axialer Verlängerung des sich in Betätigungsrichtung des Ventilkörpers erstreckenden Dichtungsabschnittes. Die axiale Richtung ist dabei die Bewegungsrichtung des Ventilkörpers zum Bewegen desselben von der Offen- in die Schließstellung. In der Schließstellung stößt dementsprechend der Ventilkörper stirn- bzw. endseitig gegen den bodenseitigen Dichtungsabschnitt an, der an einem dem Ventilkörper gegenüberliegenden Boden des Gehäuses ausgebildet ist, wodurch eine gute Abdichtung in einer Endlage des Ventilkörpers, in welcher dieser gegen einen stirnseitigen Anschlag anliegt, erreicht wird. Da sich der bodenseitige Dichtungsabschnitt auf dem Boden befindet, wird bei der erfindungsgemäßen Ausgestaltung jedenfalls auf der dem Ventilkörper gegenüberliegenden Bodenseite des Gehäuses der Bauraum maximal ausgenutzt und ein hinreichend großer Durchlass zum Hindurchführen der Strömung durch die Absperrarmatur gebildet. Dadurch wird der Strömungswiderstand vermindert.

Die erfindungsgemäße Armatur hat in an sich bekannter Weise einen Ventilsitz. Dieser wird bevorzugt ausschließlich durch Flächen gebildet, die durch das Gehäuse selbst, besonders bevorzugt einteilig daran ausgebildet sind. Dabei kann der Ventilkörper mit einem elastischen Material überzogen sein, welches zu einer verbesserten Dichtwirkung zwischen dem Ventilkörper und dem Ventilsitz führt. Ein entsprechender Überzug kann aber auch an dem Ventilsitz oder Teilen davon vorgesehen sein.

Der Ventilsitz ist dabei so ausgebildet, dass der Ventilkörper in der Schließstellung in jedem seiner Flächensegmente, welche sich quer zu der Betätigungsrichtung des Ventilkörpers erstrecken, jeweils nur teilweise an dem Ventilsitz anliegt. Dabei liegt der Ventilkörper in der Schließstellung bevorzugt unmittelbar gegen den Boden des Gehäuses an. Der dort vorgesehene bodenseitige Dichtungsabschnitt wird bevorzugt von einer Mittellängsachse durch den Ventilkörper durchsetzt, die die Bewegungsrichtung des Ventilkörpers zum Stellen zwischen der Offen- und der Schließstellung vorgibt.

Zur weiteren Verminderung des Strömungswiderstandes wird gemäß einer bevorzugten Weiterbildung der vorliegenden Erfindung vorgeschlagen, den bodenseitigen Dichtungsabschnitt absatzfrei an dem Boden auszuformen. Üblicherweise sind bestenfalls die geringe Versprünge zwischen dem bodenseitigen Dichtungsabschnitt und den davor bzw. in Strömungsrichtung dahinter liegenden Wandungsabschnitten des Gehäuses ausgebildet. Zwischen den verschiedenen Niveaus gehen die einzelnen Bereiche mit weichen Übergängen, d.h. großen Radien ineinander über, sodass Turbulenzen der Strömung und damit ein erhöhter Strömungswiderstand vermieden wird. Auch wird eine aus der EP 2 770 235 A1 bekannte und unterhalb des unterseitigen Dichtungsabschnittes befindliche Aushöhlung vermieden, die als strömungstechnischer Totraum wirken kann und so die Gefahr einer Verkeimung der Absperrarmatur begründen kann.

Mit Blick auf eine möglichst gute Abdichtung zwischen dem Ventilkörper und dem sich in Betätigungsrichtung des Ventilkörpers erstreckenden Dichtungsabschnitts wird gemäß einer bevorzugten Weiterbildung der vorliegenden Erfindung ein im Wesentlichen kreissegmentförmiger Dichtungsabschnitt vorgeschlagen, der sich bei einer Längsschnittansicht durch das Gehäuse zeigt. Der entsprechende kreissegmentförmige Dichtungsabschnitt erstreckt sich dabei bevorzugt streng radial, d. h. rechtwinklig, zu der Bewegungsrichtung des Ventilkörpers. Er hat gegenüber einer Normalen zu der Betätigungsrichtung des Ventilkörpers gegebenenfalls eine Neigung von bis zu 25°, was noch als im Wesentlichen radial angesehen wird. Der entsprechende kreissegmentförmige Dichtungsabschnitt liegt im abgesperrten Zustand der Absperrarmatur mit einem Umschlingungswinkel von zwischen 130° und 180°, bevorzugt von zwischen 145° und 170° an den Ventilkörper an. Der kreissegmentförmige Dichtungsabschnitt geht üblicherweise absatzfrei und unmittelbar in den sich in Betätigungsrichtung des Ventilkörpers erstreckenden Dichtungsabschnitt über, wodurch eine kompakte Ausgestaltung der Absperrarmatur gegeben ist, die darüber hinaus einen geringen Strömungswiderstand des durch die geöffnete Armatur strömenden Fluids ermöglicht.

So wird gemäß einer bevorzugten Weiterbildung der vorliegenden Erfindung vorgeschlagen, dass der sich in Betätigungsrichtung des Ventilkörpers erstreckende Dichtungsabschnitt als mittlerer Dichtungsabschnitt zwischen dem oberen Dichtungsabschnitt und dem bodenseitigen Dichtungsabschnitt vorgesehen ist und unmittelbar in den oberen und den bodenseitigen Dichtungsabschnitt übergeht. Der durch die vorerwähnten Abschnitte gebildete Ventilsitz besteht dementsprechend ausschließlich aus dem oberen, in einer Draufsicht, d.h. Blick in Bewegungsrichtung, im Wesentlichen kreissegmentförmigen Dichtungsabschnitt, dem sich in Betätigungsrichtung des Ventilkörpers erstreckenden Dichtungsabschnitt und dem bodenseitigen Dichtungsabschnitt. In einer Längsschnittansicht zeigt sich der Ventilsitz als im Wesentlichen L-förmig mit einem sich im Wesentlichen radial erstreckenden Steg und einem sich streng in Betätigungsrichtung des Ventilkörpers erstreckenden Steg, der bis zu dem Boden reicht.

Mit Blick auf eine möglichst gleichmäßige Durchströmung der Absperrarmatur wird gemäß Anspruch 5 eine Maßnahme vorgeschlagen, die zu einem gleichmäßigen effektiven Strömungsquerschnitt in Längsrichtung durch das Gehäuse führt. Denn nach Anspruch 5 ist der obere Dichtungsabschnitt an einem in dem Einlass vorspringenden Kragen ausgebildet, dem in Betätigungsrichtung des Ventilkörpers gegenüberliegend eine bodenseitige Mulde zugeordnet ist. In dem Maße, wie der Kragen den Strömungsquerschnitt oberseitig verengt, wird dieser unterseitig bevorzugt durch die bodenseitige Mulde vergrößert, so dass sich eine im Wesentlichen gleichmäßige Strömungsgeschwindigkeit durch die offene Absperrarmatur ergibt und ein erheblicher Drossel- bzw. Staueffekt unterbleibt.

Gemäß einer weiteren bevorzugten Ausgestaltung der vorliegenden Erfindung geht die Mulde in einem Winkel von zwischen 5° und 20° von einem Anschlussstutzen ab, der üblicherweise einteilig an dem Gehäuse ausgebildet ist. Die Mulde neigt sich dabei gegenüber einer Wandung des Einlassstutzens bevorzugt um zwischen 5° bis 20°. Eine entsprechende Neigung hat vorzugsweise eine den Strömungsdurchgang durch das Gehäuse begrenzende Innenumfangsfläche des Kragens.

Gemäß einer bevorzugten Weiterbildung der vorliegenden Erfindung ist der bodenseitige Dichtungsabschnitt in der besagten Mulde ausgeformt, wobei der in Strömungsrichtung hintere Bereich des bodenseitigen Dichtungsabschnitts gegenüber der Mulde in Betätigungsrichtung des Ventilkörpers versetzt und damit angehoben ist und vorzugsweise mit weicher konvexer Krümmung in die Innenumfangsfläche eines den Auslass ausbildenden Anschlussstutzens übergeht.

Die zuvor erwähnte Mulde bildet bevorzugt teilweise den Ventilsitz aus. Dementsprechend liegt in einer Schließstellung der Ventilkörper dichtend auch gegen die Mulde an. Die Mulde begrenzt dementsprechend den Strömungsweg bzw. verlegt diesen in der Schließstellung. Dazu hat der Ventilkörper vorzugsweise eine konvexe Stirnfläche, die in der Schließstellung mit der Mulde zusammenwirkt. Die Querschnittsfläche des Ventilkörpers ist bevorzugt auf jeder Höhenlinie, d. h. an jedem Schnitt rechtwinklig zu einer Bewegungsrichtung des Ventilkörpers rotationssymmetrisch ausgebildet. Der Ventilkörper ist üblicherweise verdrehfest an dem Gehäuse gehalten.

Die erfindungsgemäße Absperrarmatur erlaubt insbesondere ein relativ verlustfreies Durchströmen der Flüssigkeit durch die Armatur. Mit Blick darauf wird gemäß einer bevorzugten Weiterbildung der vorliegenden Erfindung vorgeschlagen, eine maximal verengte Querschnittsfläche der Absperrarmatur nur relativ gering gegenüber einer Nennquerschnittsfläche zu verringern. Die Nennquerschnittsfläche ist dabei durch den Nenndurchmesser einer an das Gehäuse anschließbaren Leitung gegeben. Die Leitung wird mit einem Innen- oder Außengewinde an das Gehäuse der Absperrarmatur angeschraubt. Jedem Nenndurchmesser ist ein vorbestimmter Gewindedurchmesser zugeordnet. So ergibt sich aufgrund eines an dem Gehäuse bevorzugt ausgebildeten Gewindes die Zuordnung des Gehäuses zu dem Nenndurchmesser. Das Gehäuse kann mit Nenndurchmessern bspw. von DN12, DN19, DN25, DN32, DN38 oder DN50 ausgebildet sein. Die erfindungsgemäße Absperrarmatur ist insbesondere eine Absperrarmatur für die Gebäudeinstallation und als wasserführende Absperrarmatur für Trinkwasser warm oder kalt gedacht.

Die maximal verengte Querschnittsfläche ist diejenige Querschnittsfläche, die durch den Kragen gebildet ist. Die Querschnittsfläche liegt in einer Ebene, die parallel zu einer die Betätigungsrichtung des Ventilkörpers enthaltenden Ebene liegt. Die entsprechende Querschnittsfläche erstreckt sich üblicherweise rechtwinklig zu einer Längsachse durch das Gehäuse, die der Achse eines Anschlussgewindes an einer Ein- und/oder Auslassöffnung des Gehäuses entspricht bzw. durch diese vorgegeben ist. Die maximal verengte Querschnittsfläche ist diejenige Querschnittsfläche in der entsprechenden Ausrichtung zwischen der bodenseitigen Mulde und dem vorspringenden Kragen, die die kleinste Querschnittsfläche zwischen Mulde und Kragen ist. Die maximal verengte Querschnittsfläche beträgt bevorzugt nicht weniger als 70% der Nennquerschnittsfläche. Besonders bevorzugt beträgt sie nicht weniger als 80% und weiter bevorzugt beträgt sie nicht weniger als 90% der Nennquerschnittsfläche.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine Längsschnittansicht des Ausführungsbeispiels, bei welcher aus Darstellungsgründen ein Ventiloberteil außerhalb des Gehäuses gezeigt ist;
- Fig. 2: eine Längsschnittansicht des in Fig. 1 gezeigten Ausführungsbeispiels in der Offenstellung;
- Fig. 3: eine Längsschnittansicht des in den Fig. 1 und 2 gezeigten Ausführungsbeispiels in einer Schließstellung;
- Fig. 4: eine perspektivische Längsschnittansicht des in den Fig. 1 bis 3 gezeigten Gehäuses;
- Fig. 5: eine weitere perspektivische Längsschnittansicht des in den Fig. 1 bis 3 gezeigten Gehäuses und

- Fig. 6: eine perspektivische Draufsicht auf das längs geschnittene und in den Fig. 1 bis 5 gezeigte Gehäuse.

In der Zeichnung ist mit Bezugszeichen 2 ein Gehäuse gekennzeichnet, welches durch zwei gegenüberliegende und miteinander fluchtende Stutzen 4 eine Einlassöffnung 6 und eine Auslassöffnung 8 ausbildet. In dem Gehäuse 2 ist ein Ventilkörper 10 beweglich gelagert. Dazu ist in einem gehäuseseitigen Kranz 12 ein Ventiloberteil 14 eingeschraubt und gegenüber dem Kranz 12 abgedichtet. Das Ventiloberteil 14 hat eine nicht steigende Spindel 16, die mit einem Schaftbereich 18 des Ventilkörpers 10 in Gewindeeingriff ist, wobei der Schaftbereich 18 verdrehsicher in einem Ventiloberteilgehäuse 20 geführt und gehalten und über einen O-Ring 22 abgedichtet ist.

Der Ventilkörper 10 weist einen metallischen Kern 24 auf, der zur Ausbildung eines Elastomermantels 26 mit einem mittels Umspritzen aufgebrachten Elastomermaterial versehen ist. Der metallische Kern 24 bildet eine obere Ringfläche 28 aus, welche von dem Elastomermantel 26 übergriffen ist. Konzentrisch zu einer Mittellängsachse 32, die die Bewegungsrichtung des Ventilkörpers 10 vorgibt, hat der Kern 24 an seinem vorderen freien Ende eine Ausnehmung, die von dem Elastomermaterial zur Ausbildung eines nach innen verdickten Dichtwulstes 30 gefüllt ist.

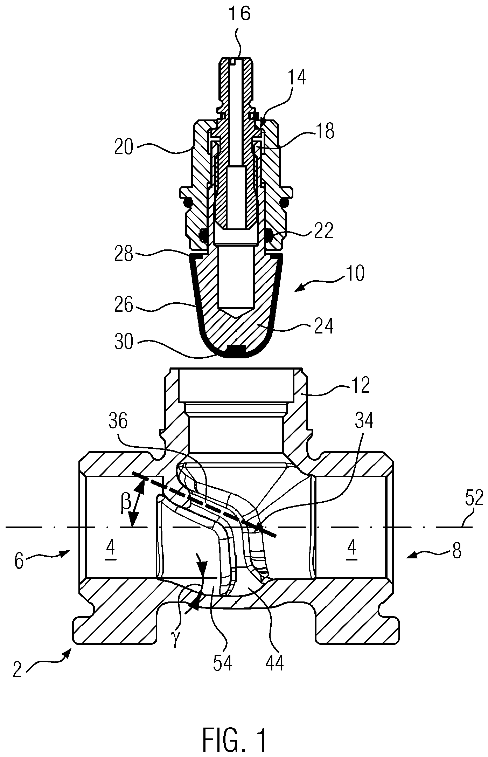

Konzentrisch zu der Mittellängsachse 32 der Spindel 16 bildet das Gehäuse 2 einen Ventilsitz 34 aus. Der Ventilsitz 34 ist in der Längsschnittansicht nach Fig. 1 als im Wesentlichen L-förmige Gestaltung zu erkennen mit einem sich im Wesentlichen parallel zu der Mittellängsachse 32 erstreckenden Zweig und einem sich im Wesentlichen rechtwinklig dazu erstreckenden Zweig, durch den ein im wesentlichen kreissegmentförmiger Dichtungsabschnitt 36 ausgebildet ist. Dieser obere Dichtungsabschnitt 36 ist relativ zu einer Normalen auf die Mittellängsachse 32 um einen Winkel β von etwa 25° geneigt. Der obere Dichtungsabschnitt 36 ist an einem in den Einlassstutzen 4 vorspringenden Kragen 38 ausgeformt. Dieser Kragen 38 geht in einen Wulst 40 über, der innerhalb des Gehäuses 2 mit dem Kragen 38 eine Trennwand defniert, die den Ventilsitz 34 ausformt, und der unterhalb des Kranzes 12 von der Innenwandung des Gehäuses 2 abgeht und dort einen sich in Betätigungsrichtung des Ventilkörpers 10 erstreckenden Dichtungsabschnitt 42 ausformt. Dieser Dichtungsabschnitt 42 wird auch als mittlerer Dichtungsabschnitt bezeichnet, da er zwischen dem oberen Dichtungsabschnitt 36 und einem bodenseitigen Dichtungsabschnitt 44 vorgesehen ist, der als unterer Dichtungsabschnitt in axialer Verlängerung einer Vorderfläche des Ventilkörpers 10 vorgesehen ist, und zwar in dem Boden des Gehäuses 2.

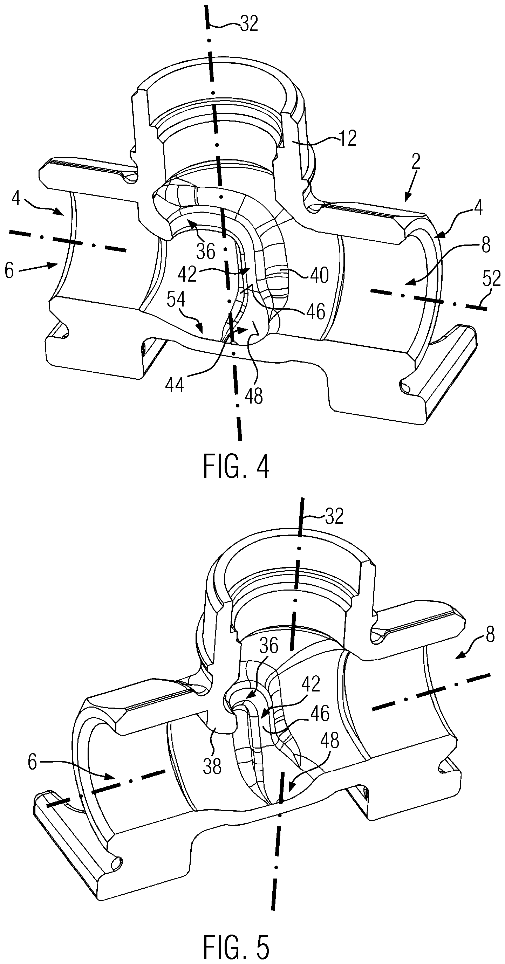

Wie insbesondere die Fig. 4 und 5 verdeutlichen, ist eine durch den oberen Dichtungsabschnitt 36 und den mittleren Dichtungsabschnitt 42 gebildete Dichtfläche 46 linienförmig und mit konstanter Breite vorgesehen. Diese linienförmige Dichtfläche 46 geht im Bereich des Bodens in eine ellipsenförmige Dichtfläche 48 über, welche durch den bodenseitigen Dichtungsabschnitt 44 gebildet wird.

Der bodenseitige Dichtungsabschnitt 44 geht - wie sich erneut bestens aus den Fig. 4 und 5 ersehen lässt - absatzfrei in einen Boden 50 des Gehäuses 2 über. Als Boden 50 wird dabei zumindest der Bereich unmittelbar in Verlängerung der Mittellängsachse 32 auf einer mit einer Längsachse 52 des Gehäuses 2 fluchtenden Linie verstanden. Mit zunehmendem radialen Abstand von der Mittellängsachse 32 erheben sich die Randabschnitte der elliptischen Dichtfläche 46 von der durch das Gehäuse 2 vorgegebenen, im Wesentlichen zylindrischen Innenumfangsfläche für die Strömungsführung.

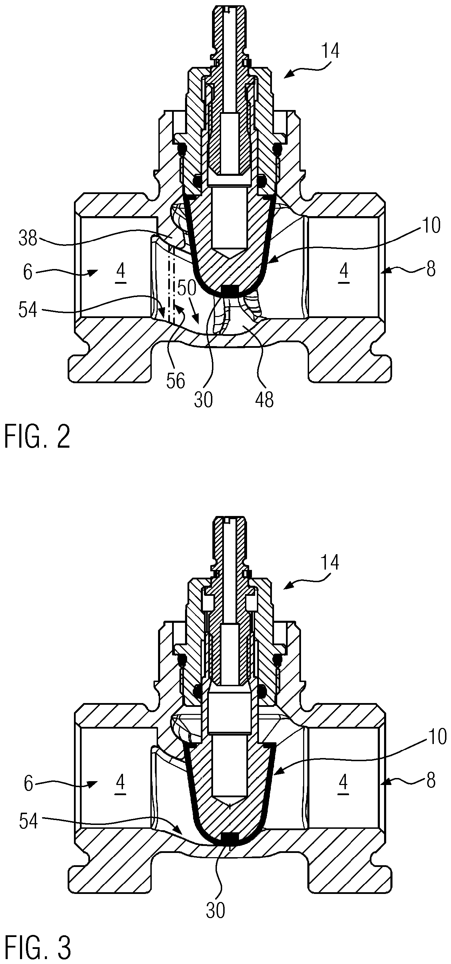

Die Fig. 4 und 5 verdeutlichen auch, dass die Dichtungsabschnitte 36, 42, 44 absatzfrei ineinander übergehen. Die Dichtflächen 46, 48 bilden die alleinigen Anlageflächen für den Dichtkörper 10 in der Schließstellung gemäß Fig. 3. Der Ventilsitz 34 wird ausschließlich durch den oberen Dichtungsabschnitt 36, den mittleren Dichtungsabschnitt 42 und den bodenseitigen Dichtungsabschnitt 44 gebildet. Die Dichtfläche 46 liegt im Bereich des mittleren Dichtungsabschnitts 42 auf Höhe der Mittellängsachse 32.

Wie beispielsweise den Schnittansichten nach den Fig. 1 bis 3 zu entnehmen ist, wird durch den vorspringenden Kragen 38 zum einen die Durchtrittsfläche der Flüssigkeit durch das Gehäuse 2 vermindert. Die zu dem Boden 50 weisende Unterseite des Kragens 38 ist schräg nach innen geneigt. Korrespondierend hierzu hat der Boden 50 gegenüberliegend zu dem Kragen 38 eine Mulde 54, durch welche zumindest teilweise die Verringerungen des Strömungsquerschnitts durch den Ventilsitz 34 kompensiert wird. Die Mulde 54 geht mit einem Winkel γ von etwa 20° von der durch den Einlassstutzen gebildeten Innenumfangsfläche ab. In dieser Mulde 54 ist - wie beispielsweise Fig. 1 verdeutlicht - auch der bodenseitige Dichtungsabschnitt 44 vorgesehen. Auf Höhe der Mittellängsachse 32 ist der bodenseitige Dichtungsabschnitt 44 Teil der Mulde 54.

Der Ventilkörper 10 besteht aus deinem distalen Kegelstumpf, an den sich einteilig ein kuppeiförmiger Abschnitt anschließt. Der Ventilkörper 10 ist rotationssymmetrisch. Der Elastomermantel 26 ist - abgesehen von dem Dichtwulst 30 - mit konstanter Dicke auf dem metallischen Kern 24 aufgebracht.

In der in Fig. 3 verdeutlichten Schließstellung liegt der Dichtwulst 30 gegen den bodenseitigen Dichtungsabschnitt 44 an. Ein üblicherweise ausschließlich an dem kegelstumpfförmigen Bereich des Ventilkörpers 10 vorgesehener Flächenabschnitt des Elastomermantels 26 liegt an dem mittleren Dichtungsabschnitt 42 dichtend an. Ein weiter distal vorgesehener Bereich des Elastomermantels 26 wirkt dichtend mit dem oberen Dichtungsabschnitt 36 zusammen.

In der Offenstellung nach Fig. 2 ergibt sich aufgrund der Kontur des Ventilkörpers 10 eine gleichförmige, weiche Durchströmung auch in einer Engstelle zwischen dem Ventilkörper 10 und dem bodenseitigen Dichtungsabschnitt 44.

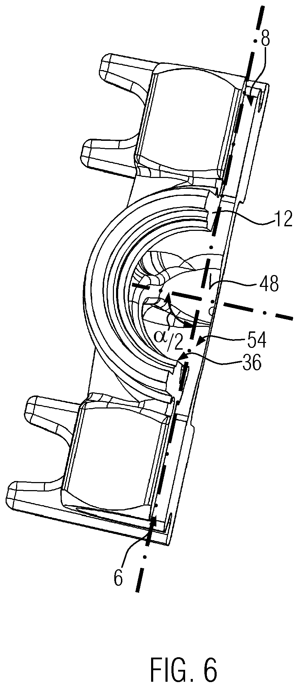

Die Figur 6 verdeutlicht in einer Draufsicht, die aus Gründen einer besseren Sichtbarkeit von Details leicht schräg zu der Mittellängsachse 32 geneigt ist, insbesondere durch den umfänglichen Verlauf der durch den oberen Dichtungsabschnitt 36 ausgebildeten Dichtfläche 46. Diese nimmt in Figur 6 einen Winkel α/2 von vorliegend 90° ein, sodass sich ein um Schwingungswinkel, mit welchem die Dichtfläche 46 im Bereich des oberen Dichtungsabschnitts 36 an dem Ventilkörper 10 anliegt, von 180° ergibt. Figur 6 lässt auch deutlich erkennen, dass die Dichtfläche 46, die durch den mittleren Dichtungsabschnitt 42 gebildet wird, sich streng in Bewegungsrichtung, d.h. entlang der Mittellängsachse 32 erstreckt.

In Figur 2 ist mit Bezugszeichen 56 eine maximal verengte Querschnittsfläche eingezeichnet. Diese maximal verengte Querschnittsfläche gibt diejenige Querschnittsfläche an, die zwischen dem Kragen 38 und der Mulde 54 die kleinste Querschnittsfläche für die Durchströmung der Flüssigkeit angibt. Die Neigung der zu der Mulde 54 weisenden Fläche des Kragens 38 ist bevorzugt entsprechend der Gegenkontur der Mulde 54 ausgebildet. So ergibt sich zwischen dem Kragen 38 und der Mulde 54 üblicherweise eine Querschnittsfläche, die konstant ist. Mit anderen Worten sind sämtliche Querschnittsflächen zwischen dem Kragen 38 und der Mulde 54 "maximal verengte Querschnittsflächen" im Sinne der vorliegenden Anmeldung. Die verengte Querschnittsfläche 56 erstreckt sich parallel zu der Mittellängsachse 32 und damit der Bewegungsrichtung des Ventilkörpers 10 jedoch rechtwinklig zu der Längsachse 52 durch das Gehäuse. Diese Längsachse 52 entspricht üblicherweise einem Gewindedurchmesser, der bei dem gezeigten Ausführungsbeispiel durch ein Innengewinde innerhalb der Stutzen 4 vorgegeben ist. Durch dieses Innengewinde wird die Anschlussmöglichkeit für ein Rohr mit vorbestimmter Nennweite vorbestimmt.

### Bezugszeichenliste

- 2: Gehäuse
- 4: Stutzen
- 6: Einlassöffnung
- 8: Auslassöffnung
- 10: Ventilkörper
- 12: Kranz
- 14: Ventiloberteil
- 16: Spindel
- 18: Schaftbereich
- 20: Ventiloberteilgehäuse
- 22: O-Ring
- 24: Metallischer Kern
- 26: Elastomermantel
- 28: Ringfläche
- 30: Dichtwulst
- 32: Mittellängsachse
- 34: Ventilsitz
- 36: Kreissegmentförmiger/oberer Dichtungsabschnitt
- 38: Kragen
- 40: Wulst
- 42: Mittlerer Dichtungsabschnitt
- 44: Bodenseitiger Dichtungsabschnitt
- 46: Dichtfläche
- 48: Elliptische Dichtfläche
- 50: Boden
- 52: Längsachse
- 54: Mulde
- 56: Verengte Querschnittsfläche

## Patentansprüche

1. Absperrarmatur mit einem Gehäuse (2), das eine Einlass- (6) und eine Auslassöffnung (8) ausbildet, in dem ein Ventilkörper (10) senkrecht zu einer Längserstreckungsrichtung (46) des Gehäuses (2) stellbar angeordnet ist und das einen Ventilsitz (34) ausbildet, an dem der Ventilkörper (10) in einer Schließstellung dichtend anliegt,
wobei der Ventilsitz (34) einen sich in Betätigungsrichtung des Ventilkörpers (10) erstreckenden Dichtungsabschnitt (42) aufweist, der in seiner Verlängerung in Betätigungsrichtung (32) des Ventilkörpers (10) in einen bodenseitigen Dichtungsabschnitt (44) übergeht, der an einem dem Ventilkörper (10) gegenüberliegenden Boden (50) des Gehäuses (2) ausgebildet ist,
**dadurch gekennzeichnet, dass** der Ventilsitz (34) derart ausgebildet ist, dass der Ventilkörper (10) in der Schließstellung in jedem seiner Flächensegmente, welche sich quer zu der Betätigungsrichtung des Ventilkörpers (10) erstrecken, jeweils nur teilweise an dem Ventilsitz (34) anliegt.

2. Absperrarmatur nach Anspruch 1, **dadurch gekennzeichnet, dass** der bodenseitige Dichtungsabschnitt (44) absatzfrei an dem Boden (50) ausgeformt ist.

3. Absperrarmatur nach Anspruch 1 oder 2, **gekennzeichnet durch** einen oberen, in einer Längsschnittansicht durch das Gehäuse(2) im Wesentlichen kreissegmentförmigen Dichtungsabschnitt (36), der im abgesperrten Zustand der Absperrarmatur mit einem Umschlingungswinkel (α) von zwischen 130° und 180° an dem Ventilkörper (10) anliegt.

4. Absperrarmatur nach Anspruch 3, **dadurch gekennzeichnet, dass** der sich in Betätigungsrichtung des Ventilkörpers (10) erstreckende Dichtungsabschnitt (42) als mittlerer Dichtungsabschnitt zwischen dem oberen Dichtungsabschnitt (36) und dem bodenseitigen Dichtungsabschnitt (44) vorgesehen ist und unmittelbar in den oberen und den bodenseitigen Dichtungsabschnitt (42, 44) übergeht.

5. Absperrarmatur nach Anspruch 3 oder 4, **dadurch gekennzeichnet, dass** der obere Dichtungsabschnitt (36) an einem in den Einlass vorspringenden Kragen (38) ausgebildet ist, den in Betätigungsrichtung (32) des Ventilkörpers (10) gegenüberliegend eine bodenseitige Mulde (54) zugeordnet ist.

6. Absperrarmatur nach Anspruch 5, **dadurch gekennzeichnet, dass** die Mulde (54) mit einem Winkel (γ) von zwischen 5° und 20° von einem einen Einlass ausbildenden Anschlussstutzen (4) abgeht.

7. Absperrarmatur nach Anspruch 5 oder 6, **dadurch gekennzeichnet, dass** der bodenseitige Dichtungsabschnitt (44) in der Mulde (54) ausgeformt ist.

8. Absperrarmatur nach einem der Anprüche 5 bis 7, **dadurch gekennzeichnet, dass** der Ventilsitz (34) teilweise durch die Mulde (54) ausgebildet ist.

9. Absperrarmatur nach einem der Ansprüche 5 bis 8, **dadurch gekennzeichnet, dass** eine durch den Kragen (38) maximal verengte Querschnittsfläche (56) nicht weniger als 70%, bevorzugt nicht weniger als 80% einer Nennquerschnittsfläche ist, die durch den Nenndurchmesser einer an das Gehäuse (2) anschließbaren Leitung gegeben ist.

## Claims

1. Shut-off valve comprising a housing (2) which forms an inlet opening (6) and an outlet opening (8) and in which a valve body (10) is adjustably arranged perpendicular to a longitudinal direction (46) of the housing (2) and which forms a valve seat (34) that the valve body (10) sealingly abuts in a closed position, the valve seat (34) having a sealing portion (42) which extends in the actuating direction of the valve body (10) and which in its extension in the actuating direction (32) of the valve body (10) transitions into a bottom sealing portion (44) which is formed on a bottom (50) of the housing (2), opposite the valve body (10), **characterised in that** the valve seat (34) is designed in such a way that the valve body (10) in the closed position in each of the surface segments thereof, which extend transversely to the actuating direction of the valve body (10), only partially abuts the valve seat (34) in each case.

2. Shut-off valve according to claim 1, **characterised in that** the bottom sealing portion (44) is formed on the bottom (50) without a step.

3. Shut-off valve according to either claim 1 or 2, **characterised by** an upper sealing portion (36) which is in substantially the shape of a circular segment as viewed in a longitudinal sectional view through the housing (2) and which in the shut-off state of the shut-off valve abuts the valve body (10) with a wrap angle (α) of between 130° and 180°.

4. Shut-off valve according to claim 3, **characterised in that** the seal portion (42) extending in the actuation direction of the valve body (10) is provided as a central sealing portion between the upper sealing portion (36) and the bottom sealing portion (44) and transitions directly into the upper and the bottom sealing portions (42, 44).

5. Shut-off valve according to either claim 3 or claim 4, **characterised in that** the upper sealing portion (36) is formed on a collar (38) which projects into the inlet and with which a bottom trough (54) is associated on the opposite side in the actuation direction (32) of the valve body (10).

6. Shut-off valve according to claim 5, **characterised in that** the trough (54) branches off at an angle (γ) of between 5° and 20° from a connection piece (4) that forms an inlet.

7. Shut-off valve according to either claim 5 or claim 6, **characterised in that** the bottom sealing portion (44) is formed in the trough (54).

8. Shut-off valve according to any of claims 5 to 7, **characterised in that** the valve seat (34) is formed in part by the trough (54).

9. Shut-off valve according to any of claims 5 to 8, **characterised in that** a maximum cross-sectional area (56) constricted by the collar (38) is not less than 70%, preferably not less than 80%, of a nominal cross-sectional area given by the nominal diameter of a pipe that can be connected to the housing (2).

## Revendications

1. Robinet d'arrêt ou d'isolement avec un corps de robinet (2), qui forme une ouverture d'entrée (6) et une ouverture de sortie (8), dans lequel est agencé un corps d'obturation de soupape (10) réglable dans une direction perpendiculaire à une direction d'étendue longitudinale (46) du corps de robinet (2), et qui forme un siège de soupape (34) contre lequel s'appuie de manière étanche le corps d'obturation de soupape (10), dans une position de fermeture,
le siège de soupape (34) présentant un tronçon d'étanchéité (42), qui s'étend dans la direction d'actionnement du corps d'obturation de soupape (10), et se raccorde, dans son prolongement dans la direction d'actionnement (32) du corps d'obturation de soupape (10), à un tronçon d'étanchéité (44) du côté du fond, formé sur un fond (50) du corps de robinet (2), à l'opposé du corps d'obturation de soupape (10), **caractérisé**
**en ce que** le siège de soupape (34) est réalisé de manière telle, que le corps d'obturation de soupape (10), dans la position de fermeture, dans chacun de ses segments de surface, qui s'étendent transversalement à la direction d'actionnement du corps d'obturation de soupape (10), ne s'appuie respectivement que partiellement contre le siège de soupape (34).

2. Robinet d'arrêt ou d'isolement selon la revendication 1, **caractérisé en ce que** le tronçon d'étanchéité (44) du côté du fond est formé sans décrochement sur le fond (50).

3. Robinet d'arrêt ou d'isolement selon la revendication 1 ou la revendication 2, **caractérisé par** un tronçon d'étanchéité supérieur (36), sensiblement en forme de secteur circulaire dans une vue en coupe longitudinale à travers le corps de robinet (2), qui, dans l'état de fermeture du robinet d'arrêt ou d'isolement, s'appuie contre le corps d'obturation de soupape (10) avec un angle de couverture périphérique (α) compris entre 130° et 180°.

4. Robinet d'arrêt ou d'isolement selon la revendication 3, **caractérisé en ce que** le tronçon d'étanchéité (42) s'étendant dans la direction d'actionnement du corps d'obturation de soupape (10) est prévu comme tronçon d'étanchéité central entre le tronçon d'étanchéité supérieur (36) et le tronçon d'étanchéité de fond (44), et se raccorde directement au tronçon d'étanchéité supérieur et au tronçon d'étanchéité de fond (42, 44).

5. Robinet d'arrêt ou d'isolement selon la revendication 3 ou la revendication 4, **caractérisé en ce que** le tronçon d'étanchéité supérieur (36) est réalisé sur une collerette (38) faisant saillie dans l'entrée, et à laquelle est associée une cavité (54) dans le fond, à l'opposé de la collerette dans la direction d'actionnement (32) du corps d'obturation de soupape (10).

6. Robinet d'arrêt ou d'isolement selon la revendication 5, **caractérisé en ce que** la cavité (54) démarre vers le bas, à partir d'un raccord de branchement (4) formant une entrée, sous un angle (γ) compris entre 5° et 20°.

7. Robinet d'arrêt ou d'isolement selon la revendication 5 ou la revendication 6, **caractérisé en ce que** le tronçon d'étanchéité de fond (44) est formé dans la cavité (54).

8. Robinet d'arrêt ou d'isolement selon l'une des revendications 5 à 7, **caractérisé en ce que** le siège de soupape (34) est formé partiellement par la cavité (54).

9. Robinet d'arrêt ou d'isolement selon l'une des revendications 5 à 8, **caractérisé en ce qu'**une surface de section transversale (56) réduite au maximum par la collerette (38) n'est pas inférieure à 70%, de préférence pas inférieure à 80% d'une surface de section transversale nominale, qui est donnée par le diamètre nominal d'une conduite pouvant être raccordée au corps de robinet (2).
